# EUROPÄISCHE PATENTSCHRIFT

(11) **EP 1 800 392 B1**
(45) Veröffentlichungstag und Bekanntmachung des Hinweises auf die Patenterteilung: **12.10.2011**
(21) Anmeldenummer: 05783990.4
(22) Anmeldetag: 30.08.2005
(51) Int. Cl.: H02P 1/02, H02M 1/088, H02M 1/092, H02H 7/08

(54) **MOTORSTEUERUNG**
MOTOR CONTROL
COMMANDE D'UN MOTEUR

(30) Priorität: 07.10.2004 DE 102004049126
(43) Veröffentlichungstag der Anmeldung: 27.06.2007
(73) Patentinhaber: SEW-EURODRIVE GmbH & Co. KG, 76646 Bruchsal (DE)
(72) Erfinder: MEYER, Harald, 75223 Niefern-Öschelbronn (DE)
(86) Internationale Anmeldenummer: PCT/EP2005/009330
(87) Internationale Veröffentlichungsnummer: WO 2006/039963

(56) Entgegenhaltungen:
- EP-A- 0 686 802
- EP-A- 1 037 354
- WO-A-03/043167
- US-A- 5 587 640
- US-A1- 2004 158 372

## Beschreibung

Die Erfindung betrifft eine Motorsteuerung.

Aus dem Bia-Report 5/2003, Seite 29/30, ist ein bekannt, wie ein sicheres Abschalten eines Umrichters ausführbar ist. Dabei wird von außen, also von externen Geräten, als erstem Kanal ein Signal angelegt, das ein Sicherheitsrelais zum Schalten veranlasst. Einer der Kontakte des Relais schaltet dabei die Spannungszufuhr der Impulsverstärker für die Endstufen-Leistungshalbleiter ab.

Das Wort "sicher" und die zu dessen Wortfamilie gehörenden Wörter sind immer auch in Bezug auf höhere Sicherheitskategorien nach Norm zu verstehen und/oder auch entsprechend der Begriffdefinitionen und Beschreibung der DE 102 61 454 A1 und der DE 102 61 452 A1.

Ein zweiter unabhängiger Kanal wird ebenfalls von außen mit einem Signal belegt, das ein Abschalten der Reglerfreigabe bewirkt, also beispielsweise die Erzeugung der Ansteuersignale in einem Mikrocontroller oder Mikroprozessor stoppt.

Die Endstufe umfasst untere Leistungshalbleiter und obere Leistungshalbleiter. Da Arbeitsspannung hoch ist, sind die Impulsverstärker für die unteren und die Impulsverstärker für die oberen Leistungshalbleiter galvanisch getrennt vorgesehen.

Aus der DE 102 61 454 A1 und der DE 102 61 452 A1 sind ebenfalls eine Motorsteuerung mit sicherem Halt bekannt. Dabei wird ebenfalls auf zwei unabhängigen Wegen, nämlich die Spannungsversorgung der Impulsverstärker und die Reglerfreigabe, die Erzeugung des Drehfeldes für den Motor abgeschaltet.

Nachteilig beim Stand der Technik ist stets, dass zu den externen Geräten hin für den ersten und den zweiten Kanal Verdrahtungsaufwand bereit zu stellen ist und die externen Geräte die beiden Signale erzeugen müssen.

Aus der EP 1 037 354 A2 ist ein Relais bekannt, mit welchem die Spannungsversorgung der Optokoppler der Treiber der Leistungsschalter der Endstufe eines Umrichters abschaltbar ist und somit ein Sperren der Endstufe des Umrichters ausführbar ist. Außerdem ist auch eine Schnittstelle vorgesehen, mit welcher ein weiterer separater Abschaltkanal realisiert ist.

Der Erfindung liegt die Aufgabe zugrunde, eine Motorsteuerung, beispielsweise einen Umrichter, weiterzubilden in möglichst einfacher und kompakter Weise.

Erfindungsgemäß wird die Aufgabe bei der Motorsteuerung nach den in Anspruch 1 und/oder 6 angegebenen Merkmalen gelöst.

Wesentliche Merkmale der Erfindung bei der Motorsteuerung sind, dass sie eine von außen zugängliche Schnittstelle und eine Steuereinheit mit Mitteln zum Erzeugen von Ansteuersignalen für Leistungshalbleiter umfasst,
wobei die Ansteuersignale mittels Impuls-Verstärkern den Steuereingängen der Leistungshalbleiter zuführbar sind,
wobei der Motorsteuerung ein Motor zugeordnet ist,
wobei in Abhängigkeit von einem Haltesignal ein sicherer Halt des versorgten Motors vorsehbar ist,
wobei über die Schnittstelle ein Haltesignal an die Motorsteuerung anlegbar ist, mit welchem ein Relais versorgbar ist,
wobei zusätzlich mit dem Haltesignal eine Reglerfreigabe der Steuereinheit derart sperrbar ist, dass die Erzeugung von für die Leistungshalbleiter vorgesehenen Ansteuersignalen verhinderbar ist (K2),
wobei mittels eines Kontaktes K1.1 des Relais die Betriebsspannüng der Imputsverstärker, wie Schaltimpuls-Treiber oder dergleichen, abschaltbar ist.

Von Vorteil ist dabei, dass ein zweikanaliges Abschalten der Motorsteuerung ausführbar ist, wobei aber über die Schnittstelle von außen nur ein einziges Signal anzulegen ist. Es ist also kein weiteres Signal anzulegen, um einen zweiten Kanal zu bedienen. Das Signal führt zur Betätigung der Relaisspule und diese bringt die verbundenen Kontakte zum Schalten. Das Signal selbst ist gemäß der Erfindung für einen zweiten Kanal, der unabhängig zum Abschalten führt, verwendet. Ein Umrichter ist also auf diese Weise einfacher und kompakter herzustellen und erreicht trotzdem dieselbe Sicherheitskategorie.

Bei einer vorteilhaften Ausgestaltung wird das Haltesignal direkt oder über andere Mittel K2 der Reglerfreigabe der Steuereinheit zugeführt. Von Vorteil ist dabei, dass das Haltesignal selbst verwendbar ist zum Herstellen eines Abschaltkanals.

Bei einer vorteilhaften Ausgestaltung umfassen die anderen Mittel K2 einen Optokoppler oder einen Transformator oder andere galvanische Trennmittel. Von Vorteil ist dabei, dass galvanische Trennung erreichbar ist und somit ein höherer Schutz für Bauteile erzielbar ist.

Bei einer vorteilhaften Ausgestaltung ist der sichere Halt durch mindestens zweikanaliges Abschalten ausführbar. Von Vorteil ist dabei, dass zwei oder mehr unabhängige Kanäle vorhanden sind zum Abschalten der Motorsteuerung.

Bei einer vorteilhaften Ausgestaltung ist mittels eines weiteren Kontaktes K1.3 des Relais ein Rückmeldesignal über die Schnittstelle vorsehbar. Von Vorteil ist dabei, dass auch bei der Verbindung vom externen Gerät zur Motorsteuerung sicher ausführbar ist, also auf dem Hinweg ein Haltesignal und auf dem unabhängigen Rückweg eine Rückmeldung übertragbar ist. Wenn also das Relais versagt, würde das externe Gerät dies feststellen können und entsprechend reagieren können.

Bei einer vorteilhaften Ausgestaltung ist mittels eines ersten Kontaktes K1.2 des Relais eine Reglerfreigabe der Steuereinheit sperrbar. Von Vorteil ist dabei, dass ein weiterer Kanal zum Abschalten herstellbar ist, also vom Relais zur Reglerfreigabe ein unabhängiges Übertragen der Abschaltinformation übertragbar ist.

*Bei einer vorteilhaften Ausgestaltung sind Mittel zur Plausibilitätskontrolle vorgesehen, die den Zustand beider Abschaltkanäle. K2 und K1.2 auf Plausibilität überprüft, wobei bei Nicht-Plausibilität ein Sperren der Reglerfreigabe der Steuereinheit derart ausführbar ist, dass die Erzeugung von für die Leistungshalbleiter vorgesehenen Ansteuersignalen verhinderbar ist (K2). Von Vorteil ist dabei, dass die Sicherheit weiter erhöhbar ist, insbesondere die Ausfallerkennungswahrscheinlichkeit verbessert.*

*Insbesondere berücksichtigen die Mittel zur Plausibilitätskontrolle ein Zeitfenster. Von Vorteil ist dabei, dass die der Plausibilitätskontrolle zugeführten Kanäle zwar in ihrem Schaltverhalten miteinander verglichen werden, aber dabei eine zeitliche Verzögerung tolerierbar ist, die bedingt ist durch technisch verschiedenartige Ausführung.*

Bei einer vorteilhaften Ausgestaltung umfasst die Steuereinheit Treiber zum Verstärken der erzeugten Ansteuersignale, wobei entweder deren Versorgungsspannung abgetrennt oder alternativ deren Steuereingang auf ein Abschalt-Potential gelegt wird. Von Vorteil ist dabei, dass somit ein weiterer Abschaltkanal zum weiteren Erhöhen der Sicherheit vorsehbar ist.

*Insbesondere werden die von den Treibern verstärkten Signale Optokopplern zugeführt und von diesen dann den Ansteuerungen der Leistungshalbleiter. Von Vorteil ist dabei, dass einfache und kostengünstige Mittel zur Erreichung des galvanischen Trennens vorsehbar sind.*

Weitere Vorteile ergeben sich aus den Unteransprüchen.

### Bezugszeichenliste

- F: Schnittstelle
- G: Schnittstelle
- R: Relais
- K1: erster Kanal
- K1.1: erster Kontakt für ersten Kanal
- K1.2: zweiter Kontakt für ersten Kanal
- K1.3: dritter Kontakt für ersten Kanal
- K2: zweiter Kanal
- K2.1: erster Kontakt für zweiten Kanal
- K2.2: zweiter Kontakt für zweiten Kanal
- K2.3: dritter Kontakt für zweiten Kanal
- S1: Spannungsquelle

- 1,2,3,4,5: Klemmen für externe Leitungen
- 10: Steuereinheit
- 20: Erzeugung der Ansteuersignale
- 30: Impulsverstärker für obere Leistungshalbleiter
- 40: Impulsverstärker für untere Leistungshalbleiter
- 50: galvanische Trennung
- 300: Mittel zur Plausibilitätskontrolle
- 400: Treiber
- 501: Optokoppler

Die Erfindung wird nun anhand von Abbildungen näher erläutert:

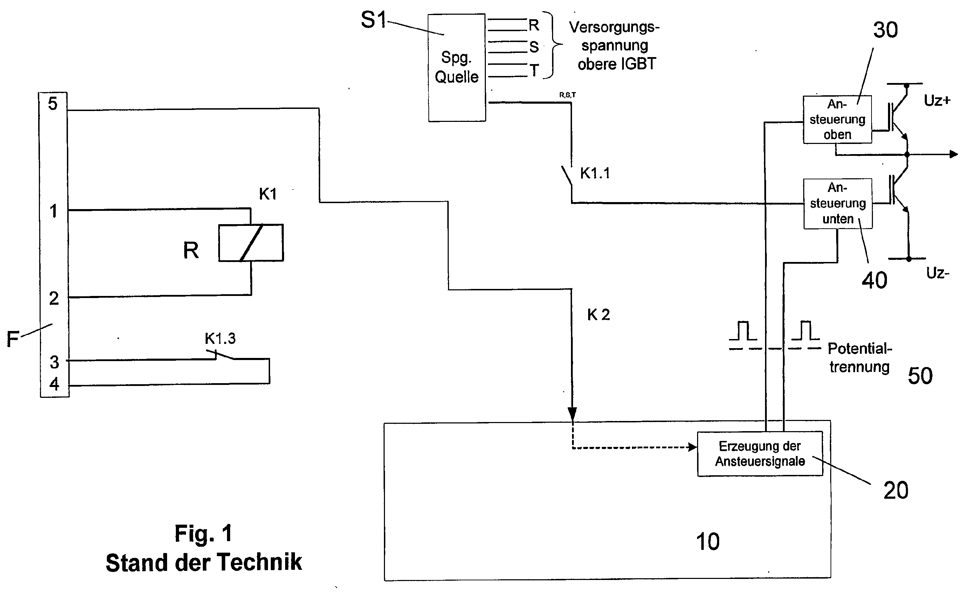

In der Figur 1 ist eine zweikanalige Abschaltung bei einer Motorsteuereinheit, also beispielsweise bei einem Umrichter, gezeigt.

Dabei umfasst die Schnittstelle F Anschlussvorrichtungen 1,2,3,4,5 für das Anschließen externer Geräte. Die von der Schnittstelle F umfassten Klemmen 1, 2 gehören zum ersten Kanal K1. Sobald ausreichend Strom durch diese Klemmen 1,2 von einem externen Gerät geleitet wird, zieht das Relais R an und die Kontakte K1.1 und K1.3 werden betätigt. Der Kontakt 1.3 ist dabei als Rückmeldung vorgesehen für das externe Gerät. Somit ist die Übergabe des Signals vom externen Gerät zum Umrichter sicher ausgeführt, insbesondere nach einer höheren Sicherheitskategorie wie Kategorie 3 oder dergleichen.

Die Spannungsquelle S1 erzeugt eine Versorgungsspannung für die unteren Impulsverstärker 40 und Versorgungsspannungen R, S, T für die oberen Impulsverstärker 30.

Der erste Kontakt K1.1 dient zum Abschalten der Spannungsversorgung für die unteren Leistungshalbleiter.

Mit einem unabhängigen Signal an der Klemme 5 ist ein zweiter unabhängiger Abschaltkanal K2 realisiert. Dabei wird das Abschaltsignal vom externen Gerät über die Klemme 5 an die Reglerfreigabe der Erzeugungsmittel 20 zur Erzeugung der Ansteuersignale der Steuereinheit 10 vorgesehen.

Somit liegt ein Rückmeldesignal für das externe Gerät bereit und es liegen zwei unabhängige Abschaltkanäle K1 und K2 vor.

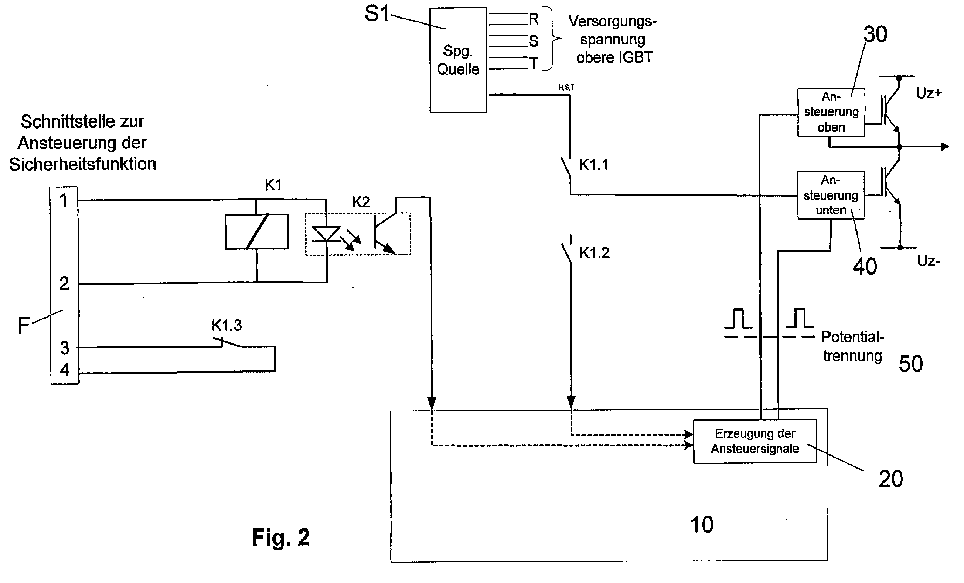

In der Figur 2 ist eine erfindungsgemäße Vorrichtung gezeigt, die gegenüber der Vorrichtung nach Figur 1 nur einzelne Änderungen aufweist. Dabei ist im Gegensatz zur Vorrichtung nach Figur 1 die Klemme 5 nicht notwendig. Denn der zweite Kanal K2 ist dadurch vorgesehen, dass parallel zur Relaisspule R ein Optokoppler vorgesehen ist, dessen Signal potentialgetrennt an die Steuereinheit 10 und innerhalb derer an die Erzeugungsmittel 20 zur Erzeugung der Ansteuersignale geleitet wird. Somit ist durch den zweiten Kanal zusätzlich und unabhängig ein Abschalten der Reglerfreigabe vorsehbar.

Optional ist auch ein zusätzliches Abschalten der Reglerfreigabe mittels des Kontaktes K1.2 vorsehbar. Somit ist auch die Abschaltverbindung vom Relais zum Erzeugungsmittel 20 sicher ausführbar.

Die Erzeugungsmittel 20 zur Erzeugung der Ansteuersignale leitet die Ansteuersignale den Impulsverstärkern 30,40 über eine galvanische Trennung 50 zu, die beispielsweise mittels Transformatoren oder mittels Optokopplern realisierbar ist. Für die Spannungsversorgung der oberen Leistungshalbleiter ist ebenfalls ein Transformator notwendig.

Die oberen und unteren Leistungshalbleiter sind in Reihe geschaltet und mit der Zwischenkreisspannung U_z versorgt, die zwischen den Potentialen U_z+ und U_z- anliegt.

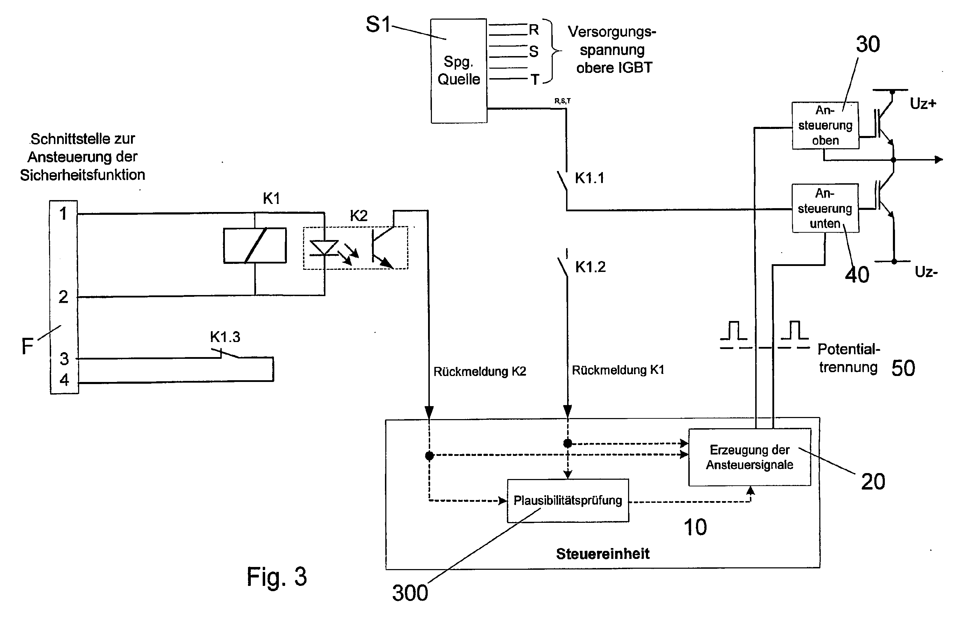

In der Figur 3 ist ein weiteres erfindungsgemäßes Ausführungsbeispiel gezeigt, bei dem Mittel 300 zur Plausibilitätsprüfung vorgesehen sind. Das heißt, dass die Rückmeldungen K1.2 und K2 miteinander verglichen werden. Bei jeder Inbetriebnahme oder beim Ein- und Ausschalten der Anlage, in welcher der Umrichter vorgesehen ist, wird der Schaltzustand im ersten und auch im zweiten Kanal verändert. Durch die Plausibilitätskontrolle wird somit erreicht, dass eine Fehlfunktion oder ein Versagen schon frühzeitig erkennbar ist. Die Ausfallerkennungswahrscheinlichkeit der Motorsteuerung ist also verbessert. Die Mittel 300 verhindern die Erzeugung von Ansteuersignalen, wenn die Plausibilitätskontrolle negativ verläuft, also die beiden Kanäle ein unterschiedliches Verhalten aufweisen. Die Sicherheit für die Motorsteuerung ist also insgesamt erhöht. Es ist sogar Kategorie 4 erreichbar. Selbstverständlich berücksichtigen die Mittel 300, dass die beiden Kanäle K1 und K2 nicht absolutgleichzeitig ihre Schaltzustände wechseln sondern wegen der verschiedenartigen technischen Realisierungsarten, wie Relais und Optokoppler, eine Zeitverzögerung auch bei funktionstüchtiger Motorsteuerung auftritt. Daher wird die Plausibilitätskontrolle auf ein Zeitfenster bezogen. Als Plausibilitätsbedingung ist daher wesentlich, dass spätestens nach dem Ablauf des Zeitfensters der langsamere der beiden Kanäle den Schaltzustand ebenfalls wie auch der schnellere gewechselt haben muss.

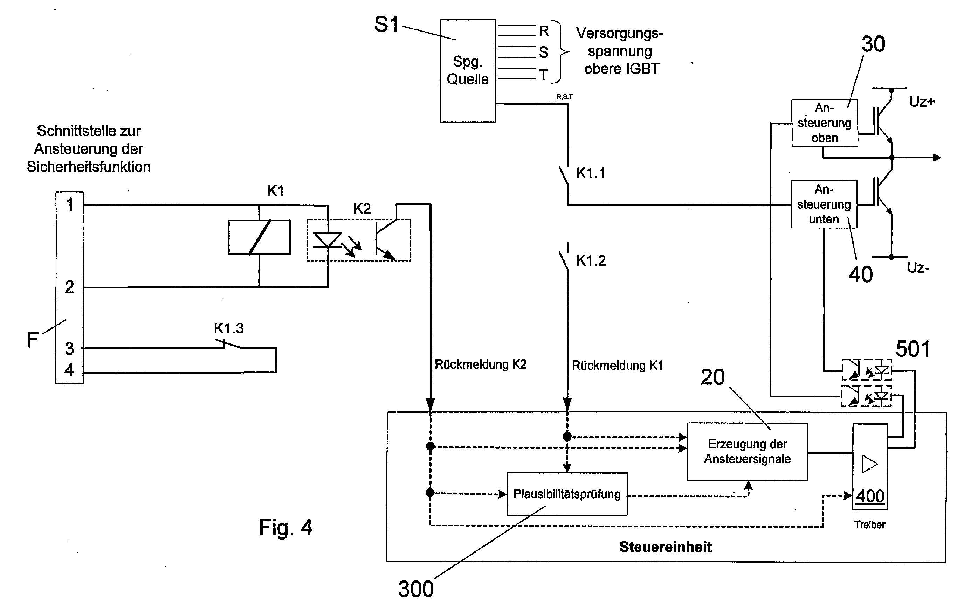

In der Figur 4 ist ein weiteres erfindungsgemäßes Ausführungsbeispiel gezeigt, bei dem Mittel 300 zur Plausibilitätsprüfung vorgesehen sind. Zusätzlich ist die Sicherheit weiter erhöht dadurch, dass der zweite Kanal K2 direkt zum Abschalten der Treiber 400, die die von der Erzeugung 20 der Ansteuersignale generierten Signale verstärken und diese verstärkten Signale an die Optokoppler 501 zur Realisierung der galvanischen Trennung 50 weiterleiten, mit diesen Treibern 400 verbunden ist. Insbesondere wird dabei in einem erfindungsgemäßen Ausführungsbeispiel entweder die Versorgungsspannung der Treiber 400 abgetrennt und in einem alternativen erfindungsgemäßen Ausführungsbeispiel der Steuereingang der Treiber 400 auf ein Potential zum Abschalten gelegt.

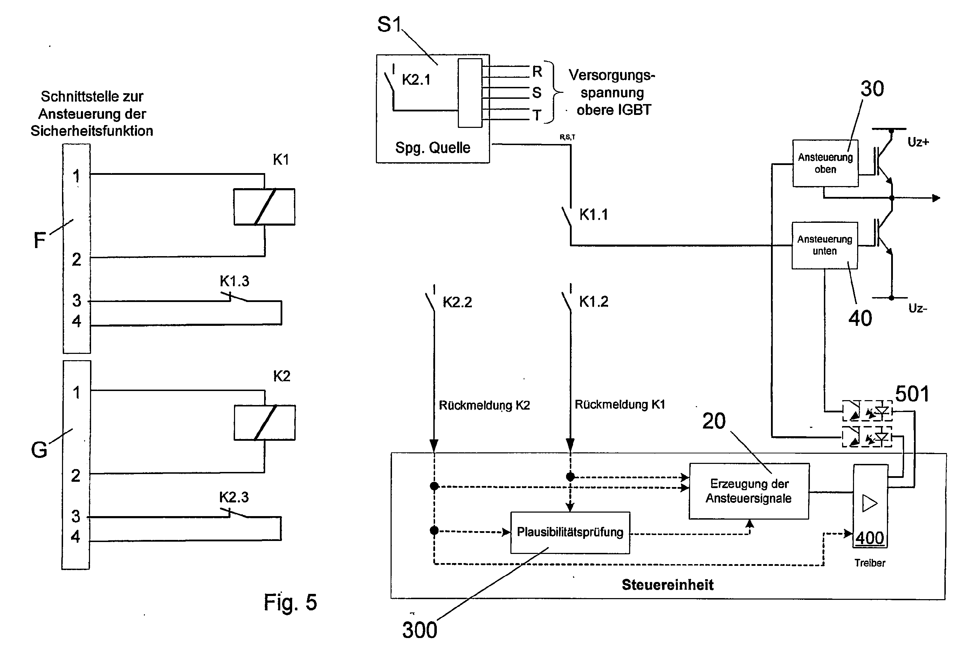

In der Figur 5 ist ein weiteres erfindungsgemäßes Ausführungsbeispiel gezeigt, bei dem der zweite Kanal nicht unter Verwendung des Optokopplers, wie in den Figuren 2 bis 4 gezeigt, sondern unter Verwendung eines zweiten Relais K2 realisert wird, das über die Schnittstelle G ansteuerbar ist von einem externen Gerät. Somit stehen für den ersten Abschaltkanal die Schnittstelle F und das zugehörige Relais K1 mit der zugehörigen Rückmeldung K1.3 sowie für den zweiten Abschaltkanal die Schnittstelle G und das zugehörige Relais K2 mit der zugehörigen Rückmeldung K2.3 zur Verfügung. Auf diese Weise sind zwei völlig unabhängige Abschaltsignale anlegbar. Dies ist insbesondere dann von Nutzen, wenn die angeschlossenen externen Geräte selbst sicherheitsgerichtet ausgeführt sind. Beispielsweise ist ein Sicherheits-Schaltgerät anschließbar.

Dabei wird der erste Kontakt K2.1 des Relais K2 für den zweiten Kanal zum Abtrennen von der Spannungsquelle S1 für die Ansteuerung der oberen Impulsverstärker 30 verwendet. Somit ist die Sicherheit schon allein dadurch gewährleistet. Mit dem zweiten Kontakt K2.2 des Relais K2 für den zweiten Kanal ist wie schon gemäß den Figuren 2 bis 4 eine Abschaltung der Erzeugung 20 der Ansteuersignale gewährleistet. Hierdurch wird die Sicherheit zweikanalig und somit erhöht. Außerdem wird dieser zweite Kontakt K2.2 auch den Mitteln 300 zur Plausibilitätskontrolle zugeführt.

Der dritte Kontakt K2.3 des Relais K2 wird als Rückmeldung für die von außen angeschlossene sicherheitsgerichtete Vorrichtung, wie Schaltgerät oder dergleichen, verwendet.

## Patentansprüche

1. Motorsteuerung, die eine von außen zugängliche Schnittstelle (F) und eine Steuereinheit (10) mit Mitteln zum Erzeugen von Ansteuersignalen für Leistungshalbleiter umfasst,
wobei die Ansteuersignale mittels Impuls-Verstärkern (30,40) den Steuereingängen der Leistungshalbleiter zuführbar sind,
wobei der Motorsteuerung ein Motor zugeordnet ist,
wobei in Abhängigkeit von einem Haltesignal ein sicherer Halt des versorgten Motors vorsehbar ist,
**wobei** über die Schnittstelle (F) ein Haltesignal an die Motorsteuerung anlegbar ist, mit welchem ein Relais versorobar ist,
wobei zusätzlich mit dem Haltesignal eine Reglerfreigabe der Steuereinheit (10) derart sperrbar ist, dass die Erzeugung von für die Leistungshalbleiter vorgesehenen Ansteuersignalen verhinderbar ist (K2),
wobei mittels eines Kontaktes (K1.1) des Relais die Betriebsspannung von Impulsverstärkern, wie Schaltimpuls-Treiber oder dergleichen, abschaltbar ist,
**dadurch gekennzichnet, dass das** Haltesignal direkt oder über andere Mittel (K2) der Reglerfreigabe der Steuereinheit zugeführt wird,
mittels eines ersten Kontaktes K1.2 des Relais eine Reglerfreigabe der Steuereinheit sperrbar ist,
Mittel zur Plausibilitätskontrolle (300) vorgesehen sind, die den Zustand beider Abschaltkanäle (K2) und (K1.2) auf Plausibilität überprüft, wobei bei Nicht-Plausibilität ein Sperren der Reglerfreigabe der Steuereinheit derart ausführbar ist, dass die Erzeugung von für die Leistungshalbleiter vorgesehenen Ansteuersignalen verhinderbar ist (K2),
wobei die Mittel zur Plausibilitätskontrolle ein Zeitfenster berücksichtigen.

2. Motorsteuerung nach mindestens einem der vorangegangenen Ansprüche,
**dadurch gekennzeichnet, dass**
die anderen Mittel K2 einen Optokoppler oder einen Transformator oder andere galvanische Trennmittel umfassen.

3. Motorsteuerung nach mindestens einem der vorangegangenen Ansprüche,
**dadurch gekennzeichnet, dass**
der sichere Halt durch mindestens zweikanaliges Abschalten ausführbar ist.

4. Motorsteuerung nach mindestens einem der vorangegangenen Ansprüche,
**dadurch gekennzeichnet, dass**
mittels eines weiteren Kontaktes K1.3 des Relais ein Rückmeldesignal über die Schnittstelle vorsehbar ist.

5. Motorsteuerung nach mindestens einem der vorangegangenen Ansprüche,
**dadurch gekennzeichnet, dass**
die Motorsteuerung ein Umrichter ist, die Leistungshalbleiter als elektronische Schalter, wie IGBT oder dergleichen, vorgesehen sind, die pulsweitenmodulierte Ansteuersignale erhalten, die von der Steuereinheit generierbar sind.

6. Motorsteuerung, die eine von außen zugängliche Schnittstelle und eine Steuereinheit mit Mitteln zum Erzeugen von Ansteuersignalen für Leistungshalbleiter umfasst,
wobei die Ansteuersignale mittels Impuls-Verstärkern den Steuereingängen der Leistungshalbleiter zuführbar sind,
wobei der Motorsteuerung ein Motor zugeordnet ist,
wobei in Abhängigkeit von einem Haltesignal ein sicherer Halt des versorgten Motors vorsehbar ist,
wobei über die Schnittstelle ein Haltesignal an die Motorsteuerung anlegbar ist,
mit dem einerseits ein Sperren der Reglerfreigabe der Steuereinheit derart bewirkbar ist, dass die Erzeugung von für die Leistungshalbleiter vorgesehenen Ansteuersignalen verhinderbar ist (K2),
und aus dem andererseits ein Relais ansteuerbar ist, wobei zumindest ein Relaiskontakt des Relais ein Abschalten der Betriebsspannung der Impulsverstärker, wie Schaltimpuls-Treiber oder dergleichen, bewirkbar ist,
wobei mittels eines ersten Kontaktes K1.2 des Relais eine Reglerfreigabe der Steuereinheit sperrbar ist,
wobei Mittel zur Plausibilitätskontrolle vorgesehen sind, die den Zustand beider Abschaltkanäle K2 und K1.2 auf Plausibilität überprüft, wobei bei Nicht-Plausibilität ein Sperren der Reglerfreigabe der Steuereinheit derart ausführbar ist, dass die Erzeugung von für die Leistungshalbleiter vorgesehenen Ansteuersignalen verhinderbar ist (K2),
wobei die Mittel zur Plausibilitätskontrolle ein Zeitfenster berücksichtigen.

7. Motorsteuerung nach mindestens einem der vorangegangenen Ansprüche,
**dadurch gekennzeichnet, dass**
das Haltesignal mittels einem oder zwei Strompfaden übertragbar ist, insbesondere mittels einer einadrigen Leitung oder einer zweiadrigen Leitung.

8. Motorsteuerung nach mindestens einem der vorangegangenen Ansprüche,
**dadurch gekennzeichnet, dass**
die Schnittstelle zur Übertragung des Haltesignals zwei oder weniger Klemmen aufweist.

9. *Motorsteuerung nach mindestens einem der vorangegangenen Ansprüche,*
***dadurch gekennzeichnet, dass***
*die Steuereinheit Treiber zum Verstärken der erzeugten Ansteuersignale umfasst, wobei entweder deren Versorgungsspannung abgetrennt oder alternativ deren Steuereingang auf ein Abschalt-Potential gelegt wird.*

10. *Motorsteuerung nach Anspruch 9,*
***dadurch gekennzeichnet, dass***
*die von den Treibern verstärkten Signale Optokopplern zum galvanischen Trennen zugeführt werden und von diesen dann den Ansteuerungen der Leistungshalbleiter.*

## Claims

1. Motor control comprising an externally accessible interface (F) and a control unit (10) having means for generating control signals for power semiconductors,
wherein the control signals can be supplied to the control inputs of the power semiconductors by means of pulse amplifiers (30, 40),
wherein a motor is associated with the motor control, wherein a safe stop of the supplied motor can be provided in dependence on a stop signal,
wherein a stop signal can be applied to the motor control via the interface (F), with which signal a relay can be supplied,
wherein additionally with the stop signal, a regulator release of the control unit (10) can be blocked in such a manner that the generation of control signals provided for the power semiconductors can be prevented (K2),
wherein the operating voltage of pulse amplifiers, such as switching pulse drivers or the like, can be switched off by means of a contact (K1.1) of the relay,
**characterised in that**
the stop signal is supplied to the regulator release of the control unit directly or via other means (K2),
a regulator release of the control unit can be blocked by means of a first contact K1.2,
means for plausibility checking (300) are provided, which check the state of both switching-off channels (K2) and (K1.2) for plausibility, and in the event of implausibility a blocking of the regulator release of the control unit can be carried out in such a manner that the generation of control signals provided for the power semiconductors can be prevented (K2),
the means for the plausibility checking taking account of a time window.

2. Motor control according to at least one of the preceding claims,
**characterised in that**
the other means K2 comprise an optocoupler or a transformer or other electrical isolation means.

3. Motor control according to at least one of the preceding claims,
**characterised in that**
the safe stop can be carried out by at least two-channel switching-off.

4. Motor control according to at least one of the preceding claims,
**characterised in that**
a check-back signal can be provided via the interface by means of a further contact K1.3 of the relay.

5. Motor control according to at least one of the preceding claims,
**characterised in that**
the motor control is a converter, the power semiconductors are provided as electronic switches, such as IGBTs or the like, which receive pulse-width-modulated control signals which can be generated by the control unit.

6. Motor control comprising an externally accessible interface and a control unit having means for generating control signals for power semiconductors,
wherein the control signals can be supplied to the control inputs of the power semiconductors by means of pulse amplifiers,
wherein a motor is associated with the motor control, wherein a safe stop of the supplied motor can be provided in dependence on a stop signal,
wherein a stop signal can be applied to the motor control via the interface,
with which stop signal, on the one hand, a blocking of the regulator release of the control unit can be brought about in such a manner that the generation of control signals provided for the power semiconductors can be prevented (K2),
and from which stop signal, on the other hand, a relay can be controlled, a switching-off of the operating voltage of the pulse amplifiers, such as switching pulse drivers or the like, being able to be brought about at least one relay contact of the relay [sic],
wherein a regulator release of the control unit can be blocked by means of a first contact K1.2 of the relay,
wherein means for plausibility checking are provided, which check the state of both switching-off channels K2 and K1.2 for plausibility, and in the event of implausibility a blocking of the regulator release of the control unit can be carried out in such a manner that the generation of control signals provided for the power semiconductors can be prevented (K2),
wherein the means for the plausibility checking take account of a time window.

7. Motor control according to at least one of the preceding claims,
**characterised in that**
the stop signal can be transmitted by means of one or two current paths, in particular by means of a single-wire line or a double-wire line.

8. Motor control according to at least one of the preceding claims,
**characterised in that**
the interface for transmitting the stop signal has two or fewer terminals.

9. Motor control according to at least one of the preceding claims,
**characterised in that**
the control unit comprises drivers for amplifying the generated control signals, either the supply voltage of the drivers being cut off or alternatively their control input being connected to a switching-off potential.

10. Motor control according to Claim 9,
**characterised in that**
the signals amplified by the drivers are supplied to optocouplers for electrical isolation and by these optocouplers then to the controls of the power semiconductors.

## Revendications

1. Commande de moteur qui comprend une interface (F) accessible de l'extérieur et une unité de commande (10) avec des moyens pour générer des signaux de commande pour des semi-conducteurs de puissance,
les signaux de commande pouvant être amenés aux entrées de commande des semi-conducteurs de puissance au moyen d'amplificateurs d'impulsions (30, 40),
un moteur étant associé à la commande de moteur,
un arrêt sûr du moteur alimenté pouvant être prévu en fonction d'un signal d'arrêt,
un signal d'arrêt, avec lequel un relais peut être alimenté, pouvant être appliqué à la commande de moteur via l'interface (F),
une validation de régulateur de l'unité de commande (10) pouvant de plus être bloquée avec le signal d'arrêt de façon que la génération de signaux de commande prévus pour les semi-conducteurs de puissance puisse être empêchée (K2),
la tension de fonctionnement d'amplificateurs d'impulsions, tels que des pilotes d'impulsions de commutation ou analogues, pouvant être coupée au moyen d'un contact (K1.1),
**caractérisée en ce**
**que** le signal d'arrêt est amené à la validation de régulateur de l'unité de commande directement ou par l'intermédiaire d'autres moyens (K2),
une validation de régulateur de l'unité de commande pouvant être bloquée au moyen d'un premier contact (K1.2) du relais,
des moyens de contrôle de plausibilité étant prévus, qui vérifient la plausibilité de l'état des deux voies de coupure (K2) et (K1.2), un blocage de la validation de régulateur de l'unité de commande étant réalisable en cas de non-plausibilité de façon que la génération de signaux de commande prévus pour les semi-conducteurs de puissance puisse être empêchée (K2),
les moyens de contrôle de plausibilité tenant compte d'une fenêtre temporelle.

2. Commande de moteur selon au moins une des revendications précédentes, **caractérisée en ce**
**que** les autres moyens K2 comprennent un optocoupleur, un transformateur ou d'autres moyens de séparation galvanique.

3. Commande de moteur selon au moins une des revendications précédentes, **caractérisée en ce**
**que** l'arrêt sûr peut être réalisé par coupure sur au moins deux voies.

4. Commande de moteur selon au moins une des revendications précédentes, **caractérisée en ce**
**qu'**un signal de retour via l'interface peut être prévu au moyen d'un autre contact K1.3 du relais.

5. Commande de moteur selon au moins une des revendications précédentes, **caractérisée en ce**
**que** la commande de moteur est un variateur de vitesse, les semi-conducteurs de puissance sont prévus sous la forme de commutateurs électroniques tels qu'IGBT ou analogues qui reçoivent des signaux de commande modulés en largeur d'impulsion qui peuvent être générés par l'unité de commande.

6. Commande de moteur qui comprend une interface accessible de l'extérieur et une unité de commande avec des moyens pour générer des signaux de commande pour des semi-conducteurs de puissance,
les signaux de commande pouvant être amenés aux entrées de commande des semi-conducteurs de puissance au moyen d'amplificateurs d'impulsions,
un moteur étant associé à la commande de moteur,
un arrêt sûr du moteur alimenté pouvant être prévu en fonction d'un signal d'arrêt,
un signal d'arrêt pouvant être appliqué à la commande de moteur via l'interface,
avec laquelle, d'une part, un blocage de la validation de régulateur de l'unité de commande peut être provoqué de façon que la génération de signaux de commande prévus pour les semi-conducteurs de puissance puisse être empêchée (K2),
et à partir de laquelle, d'autre part, un relais peut être commandé, au moins un contact de relais du relais pouvant provoquer une coupure de la tension de fonctionnement des amplificateurs d'impulsions, tels que des pilotes d'impulsions de commutation ou analogues,
une validation de régulateur de l'unité de commande pouvant être bloquée au moyen d'un premier contact K1.2 du relais,
des moyens de contrôle de plausibilité étant prévus, qui vérifient la plausibilité de l'état des deux voies de coupure K2 et K1.2, un blocage de la validation de régulateur de l'unité de commande étant réalisable en cas de non-plausibilité de façon que la génération de signaux de commande prévus pour les semi-conducteurs de puissance puisse être empêchée (K2),
les moyens de contrôle de plausibilité tenant compte d'une fenêtre temporelle.

7. Commande de moteur selon au moins une des revendications précédentes, **caractérisée en ce**
**que** le signal d'arrêt peut être transmis au moyen d'un ou deux circuits de courant, en particulier au moyen d'un câble à conducteur unique ou d'un câble à deux conducteurs.

8. Commande de moteur selon au moins une des revendications précédentes, **caractérisée en ce**
**que** l'interface de transmission du signal d'arrêt présente deux bornes ou moins.

9. Commande de moteur selon au moins une des revendications précédentes, **caractérisée en ce**
**que** l'unité de commande comprend des pilotes pour amplifier les signaux de commande générés, dont soit la tension d'alimentation est coupée, soit l'entrée de commande est mise à un potentiel de coupure.

10. Commande de moteur selon la revendication 9,
**caractérisée en ce**
**que** les signaux amplifiés par les pilotes sont amenés à des optocoupleurs pour la séparation galvanique et ensuite par ceux-ci aux commandes des semi-conducteurs de puissance.
